# EUROPEAN PATENT APPLICATION

(11) **EP 4 745 873 A1**
(43) Date of publication of application: **20.05.2026**
(21) Application number: 24213829.5
(22) Date of filing: 19.11.2024
(51) Int. Cl.: G06T 5/00, G06T 19/20

(54) **METHOD AND DEVICE FOR COLOURISING A THREE-DIMENSIONAL POINT CLOUD**

(71) Applicant: LEICA GEOSYSTEMS AG, 9435 Heerbrugg (CH)
(72) Inventor: FETZEL, Richard, 6706 Bürs (AT); HERBST, Christoph, 6850 Dornbirn (AT)
(74) Representative: Kaminski Harmann

(57) **Abstract**

The invention relates to a method and system for colourising a three-dimensional point cloud having a depth layer and/or intensity layer (10), with capturing at least a first 2D-colour image (20) of at least part of the setting and automatically detecting 3D-features (fl-f3) in the depth layer and/or intensity layer (10), automatically detecting first 2D-features (F1-F3) in the first image (20) and automatically matching corresponding 3D- and 2D-features (fl-f3, F1-F3). Further, there is automatically allocating or assigning the colour information, using matched features (fl-f3, F1-F3) as positional anchor points or fix points and based on the known pixel positions in the image (20), as a colour layer to the point cloud.

## Description

The present invention relates to a method and system for point cloud generation by terrestrial laser scanning according to the independent claims.

Generating three-dimensional point clouds by terrestrial surveying systems is used to survey many different settings such as construction sites, building facades, industrial facilities, interior of houses, or any other applicable setting such as accident sites and crime scenes. The surveys achieved therewith may be used to obtain accurate three-dimensional (3D) models of a setting, wherein the models consist of point clouds. The points of such a cloud are stored by coordinates in a coordinate system, which may be defined by a terrestrial laser scanner which recorded the point cloud.

Here, a laser scanner guides the measurement beam of a distance measuring unit according to a defined scan pattern continuously over object surfaces within a measurement space and in the process simultaneously detects direction and distance with respect to the respective measurement point. Direction determination usually is based on angle measurements. Distance determination is based on reflected measurement radiation, reflected from the irradiated target object so that at least a part of the measuring radiation is reflected back to the laser scanner and detected. For detection, the scanner has a receiver embodied as an optoelectronic sensor, which is designed for detection of the reflected measuring radiation. From the distance and the direction information correlated therewith for each scan point, a so-called 3D point cloud is generated from a plurality of scan points by means of data processing.

Such terrestrial measuring devices have for this purpose at least one radiation source or emitter for generating optical measurement radiation, often laser radiation, and optical means, including a rotating deflector, by means of which the generated measuring radiation can be emitted in free space onto a target or object to be measured, because of which these devices are also referred to as so-called free beam sensors. Optical measurement radiation is understood in this case as electromagnetic radiation, not only in the visible range of the spectrum, but rather also radiation in the ultraviolet, in the infrared, and in the terahertz range. Laser scanning devices are known which use measuring radiation having a measurement wavelength of 405 nm, 532 nm, 635 nm, 650-690 nm, 780 nm or 785 nm, 795 nm, 808-850 nm, 905 nm, 980 nm, 1064 nm, or between 1500 and 1570 nm.

In terms of the fundamental structure, such terrestrial scanners are thus designed to determine a distance to an object point as measurement or scan point using an electro-optical and often laser-based distance measuring device. The measurement beam of the distance measuring device is deflected in one spatial direction by rotating aforementioned deflector about one axis (elevation axis) and -independent therefrom- in another spatial direction by rotation of a top part or body, comprising or supporting the deflector part, about a second axis (azimuth axis). Said body is for example rotatably mounted to a base comprising a tripod for stationing the laser scanner at a known, referenced location. Thereby, rotational angles are measured by respective angle encoders and the rotation speed of the deflector/about the elevation axis usually is much higher than the speed of rotation of the body/about the azimuth axis. In other words, in order to measure the distance of a point the beam is directed at, a typical laser scanner comprises a targeting unit for sending out a scanning beam and for receiving the reflected beam whilst rotation means alter the direction of the beam, commonly a vertical rotation axis and a horizontal rotation axis, wherein both axes are sensed with angle sensors. Usually, the rotation of the vertical axis is measured by an azimuth angle and the rotation of the horizontal axis is measured by an elevation angle whereby one of said axes may be a slow axis and the other one a fast axis.

As a result, a spatial measurement region can be recorded. The scanning wide in the horizontal is here frequently 360°, i.e. one full circle about the azimuth axis, and in the vertical for example 180°, i.e. a half circle about the elevation axis. The result is that one hemisphere is covered. Other typical settings are a 180° azimuth rotation with a vertical rotation typically done with 360° whereby there is a blind spot of some degrees (e.g. 60°) at the bottom though, because of structures of the scanner blocking the line of sight to an object. In any case, the scan angles or scan width together with a maximal measurement distance define the measurement space or scan sphere. In this case, the measurement region ranges from a few centimetres up to a few kilometres, with accuracy in the mm range or below and measurement times of the individual points in the sub-microseconds to milliseconds range.

Usually, the surveying instrument constitutes the origin of the coordinate system by an instrument centre, in particular by the so called nodal point of the surveying instrument. As said, the points are usually surveyed by associating a distance measured with a laser beam (for instance according to the principle of time-of-flight, i.e. the travel time measurement method by observing the time between sending out and receiving a signal) with the alignment under which the distance was measured. Usually, the coordinate system is a spherical coordinate system, such that a point is characterised by a distance value, an elevation angle and an azimuth angle with reference to the origin of the coordinate system which can also be transformed into Cartesian coordinates for display and further processing. The alignment angles are achieved with said angle sensors arranged at the vertical axis and at the horizontal axis. Hence, the 3D-coordinate of a respective surveyed object point results from the (horizontal and elevation) angle values of the targeting direction and the determined distance to the object point. The combined 3D-coordinates of the surveyed object points within the setting form the point cloud, whereby additional information such as beam intensity value or brightness value of a respective survey point can be determined (how much light is received resp. integrated return signal strength) and stored as a layer in addition to a depth layer of the point cloud, for instance.

In order to provide a graphically more ergonomic visualization, the point cloud may be digitally colourised. In various applications, terrestrial surveying is hence supported by imaging data of at least one camera which is combined with a laser scanner, e.g. by including the camera in the instrument or mounting it on the same platform as the instrument.

That is, from a colour image of the setting (more precisely its pixel colour values) and a known positional relationship of the camera/image to the distance measuring unit/3D-point cloud, colour information such a RGB-value is determined for a respective 3D-point (correspondence between 3D point and image pixel is determined based on the known positional relationship of each 3D-point and pixel). The colour values are stored with the point cloud, for example as an additional colour layer. Such point cloud colourisations are known in prior art and for example described in US20140063489A1, US2016061954A1 and US20120070077A1.

However, one known problem are parallax issues which occur due to different perspectives of a RGB-camera and a surveying instrument, resulting in errors/artifacts or misalignments. If a camera on a surveying instrument is placed off-axis, this off-axis placement will cause parallax. As a consequence, an incorrect colourisation may happen. The parallax effect takes place at regions where the camera views a different part of the measured setting than the surveying instrument does. These circumstances make it hard or even impossible to colourize a point-cloud without artifacts like missing colours or wrong-coloured points.

The prior art offers only complicated solutions to solve or avoid such parallax errors. For example, according to US20140063489A1, the camera is incorporated inside a laser scanner and components are arranged such that the camera and the scanner have the same perspective. This construction requires a high technical effort and is therefore very expensive. According to US20120070077A1, a camera is a posteriori brought into the same position where the surveying instrument had been to scan the environment. This process requires extra high precision of the components.

If multiple camera images are needed for point cloud colourization, e.g. for a 360°-scan, known procedures are even more obfuscated. The multiple images are stitched together for example to form a panorama image based on the image data. The algorithms of the prior art align and distort images to provide a stitched panorama with the best visual quality regarding parallax artifacts between camera poses. In a surveying context this is not sufficient because measurements based on this data are not possible anymore.

Thus, particularly in case of such panorama image generation for point cloud colourization using image alignment between individual 2D-images, misalignments between the colour (RGB) layer and the 3D layer of a point cloud are likely to happen because of free distortions of the single images during the stitching or alignment process.

It is therefore an object of the present invention to provide an improved method and device for generation of colourized point clouds in the field of terrestrial laser scanning.

It is further object of the present invention to provide a method and device enabling point clouds free of artifacts or wrongly coloured points, in particular in case of a parallax between image capturing device and 3D-measuring unit.

It is another object of the present invention to provide a method and device with 3D-position true point colourization of a point cloud even in case of multiple underlying colour images of different perspective.

At least one of these objects is achieved in accordance with the invention by the characterizing features of the independent claims or by features of the dependent claims, and these solutions are also developed by features of the dependent claims.

The present invention relates to a method, which may be performed by or with a surveying system as claimed, for colourising a three-dimensional (3D) point cloud. The method comprises surveying object surfaces within a setting, preferably within a measuring range of maximal 200m, according to a scan pattern, in particular with a terrestrial laser scanner. The method further comprises generating a 3D-point cloud thereof, whereby the point cloud provides an intensity layer and/or a depth layer representing 3D-information of surveyed object surface points. The depth layer can provide spatial information about object points preferably in form of 3D-coordinates and/or in form of a matrix or map of point distances, i.e. measured distance values mapped according to the scan pattern, in dependence on the respective measurement direction.

Further, there is capturing at least a first 2D-colour image of at least part of the setting, in particular with a camera of the laser scanner. This provides colour information of the object surfaces by colour values of image pixels of known pixel position in the first 2D-colour image. Thereby, each pixel value of the at least one 2D-colour image can be assigned to coordinates within a camera coordinate system, which has a projection centre as origin.

The method further comprises automatically detecting first intensity features in the intensity layer and/or first 3D-features in the depth layer and automatically detecting first 2D-features in the first 2D-colour image. Then, features which are analogous in the point cloud and the image are automatically matched, that is depending on the available/extracted point cloud features, intensity features are matched to corresponding 2D-features and/or depth layer features are matched to corresponding image features.

Further, there is automatically allocating or assigning the colour information, using matched features as positional anchor points or fix points and based on the known pixel positions in the 2D-colour image, as a colour layer to the point cloud.

As an option, colour information of image pixels representing matched features in the first 2D-colour image is allocated by associating coordinates of 3D points representing a respective matched feature in the point cloud, based on a known positional relationship of a point cloud's coordinate frame to a first 2D-colour image's coordinate frame. As a further option, colour information of pixels not representing matched features is allocated using the locations of allocated pixels representing matched features used as positional reference, whereby the resolution of the colour layer is independent of the resolution of the depth and/or intensity layer.

As another option, a 3D-information of a point cloud feature such as a distance value or 3D-coordinate associated with an intensity or depth feature is taken into account for said feature matching.

As still another option, the method comprises automatically deriving 3D-structural composites from at least some of the intensity or 3D-features, and from corresponding matched 2D-features, automatically deriving 2D-structural composites corresponding to the 3D-structural composites, automatically calculating an affine transformation of a respective 2D-structural composite to the corresponding 3D-structural composites, and automatically basing said allocation on the calculated affine transformations. Thereby, said allocating can be based on warping 2D-structural composites to corresponding 3D-structural composites and/or the structural composites can comprise simplexes and/or whereby said deriving can be based on Delaunay triangulation.

Optionally, there is detecting object corner-points and/or edges as 2D-features and/or 3D-features. As another option, the detecting of 2D-features is position targeted using determined positions of detected 3D-features. That is, positional information of features extracted from the point cloud are used as a rough localization information for a subsequent search for corresponding features in said image, for instance for determining a region of interest for 2D-feature extraction.

Optionally, there is automatically projecting the depth and/or intensity layer and the 2D-colour image to a common projection surface, in particular a sphere or cube, and automatically using respective projection positions of features for said feature matching.

In a further development of the method, there is capturing at least a second 2D-colour image providing second colour information of object surfaces of at least a partly different part of the setting than the first image, whereby allocating second colour information of the second 2D-colour image is based on second 2D-features of the second 2D-colour image matched to second 3D-features of the point cloud and therewith substantially independent of said allocating of colour information of the first 2D-colour image.

Thereby, there is optionally a common colour layer from a combined first and second colour information whereby the combination solely results from the respective allocation to the depth layer.

In another further development, there is a flagging of points of the 3D-point cloud and/or pixels of the 2D-colour image and considering the flags for said feature matching, by weighting (including also dismissing or ignoring) and/or classifying of a respective intensity and/or 3D-feature according to an underlying flag.

As an option, there is automatically fusing the intensity layer and the depth layer before feature matching and basing the feature matching on fused intensity features and 3D-features. Hence, in embodiments being based both on an intensity layer and a depth layer, these layers are used in combination.

The present invention also relates to a surveying system comprising a laser scanner.

The scanner has a beam directing unit configured to direct a transmission beam in a determined direction according to a scan pattern towards surface points of objects within a setting and receive a reception beam reflected from the object surface points and a distance measuring unit for determining an object point depth based on an evaluation of the reception beam.

The scanning system further comprises at least one camera configured to capture at least a first 2D-colour image providing colour information of the object surfaces by colour values of image pixels of known pixel position in the at least one first 2D-colour image, the camera being arranged in known positional relationship to the beam direction unit.

Above that, the laser scanner has a computing unit which is configured to generate a 3D-point cloud providing an intensity layer and/or a depth layer representing 3D-coordinates of surveyed object points based on the determined direction and object point depth.

The computer is further configured to detect first features in the intensity layer and(or in the depth layer and detect first 2D-features in the first 2D-colour image. Further, the computer is further configured to match these image features to corresponding features extracted from the depth layer or from the intensity layer or to both types of features, as available.

The computer is also configured to use matched features as positional anchor points or fix points for allocating or assigning the colour information, based on the known pixel positions of pixels representing a matched feature, as a colour layer to the point cloud.

As an option, the computer of the surveying system is further configured to update at least one calibration parameter of the camera based on the positional anchor points. Hence, the positional reference provided by the 3D-measurements of the distance measuring unit is used for correction/adaption of a calibration parameter of the device's camera, whereby the new parameter value can be stored and replace the previous value for further scanning procedures.

Optionally, the system comprises multiple cameras which have different parallax shift relative to a centre of origin of the distance measuring unit or 3D-coordinate measurement. The inventive allocation of colour information to the 3D-point cloud then can be done separately for an image each of the different cameras, independent of the other cameras/images.

The present invention also relates to a computer program comprising program code which is stored on a machine-readable medium, or being embodied by an electromagnetic wave comprising a program code segment, and has computer-executable instructions for performing the automatic steps of the method as claimed, in particular when run on a computer of a surveying system as claimed.

The present invention provides the advantage that errors or artifacts of a colourized point cloud can be reduced or avoided which may in particular result from a parallax between a distance measuring unit and a camera of a surveying system. In particular important regions which are also most prone to such errors, for example edges and corners, are employed as backbones for point cloud colourization as they are identified in the 3D-measurement data (in the depth data and/or in the brightness data) and correspondingly in the image data, allowing for a precise and reliable transfer of colour data of such features to the 3D-points representing these features. The proposed method is robust against all kinds of parallax between camera poses, image to Lidar displacements, including depth and lateral parallax.

Further, these particular features serve as fix points or support points for colourization of other 3D-points or correct wrapping of the whole RGB-layer to the depth layer or intensity layer. The matched features, for example in form of feature triangles, allow to derive transformations between colour layer and point cloud layer and allows to allocate geometrical correct colour data to all (other) 3D-points or parts of the point cloud.

Thereby, the resolution of the colour image needs not to be adapted / down-sized to the resolution of the point cloud (scan density) but can be maintained. Thus, high resolution images can be attached -geometrically correct- to (comparably) low resolution scans.

Independence can not only be provided with regard to RGB-resolution in view of 3D-resolution but also when using multiple images for point cloud colourization with regard to each other. Each image can be individually warped to the point cloud (its respective section covered by the respective image), without interference or influence of another colour picture. In particular, no 2D-image stitching or alignment has to take place and therewith a source of errors for point cloud colourization can be bypassed.

In the following, the invention will be described in detail by referring to exemplary embodiments that are accompanied by figures, in which:
- Figs. 1a,b:: show one embodiment of an exemplary surveying system with a terrestrial laser scanner for generation of 3D-point clouds;
- Fig. 2:: shows schematically in an exemplary manner the general problem of misassignment of a colour image pixel to a 3D-point;
- Figs. 3a,b:: schematically an example of a method for point cloud colourization;
- Figs. 4a,b:: show schematically a further development of the method with making use of feature triangulation;
- Fig. 5:: shows an exemplary transformation of image data to 3D-data; and
- Fig. 6: shows an exemplary scheme of camera calibration based on allocation of colour information.

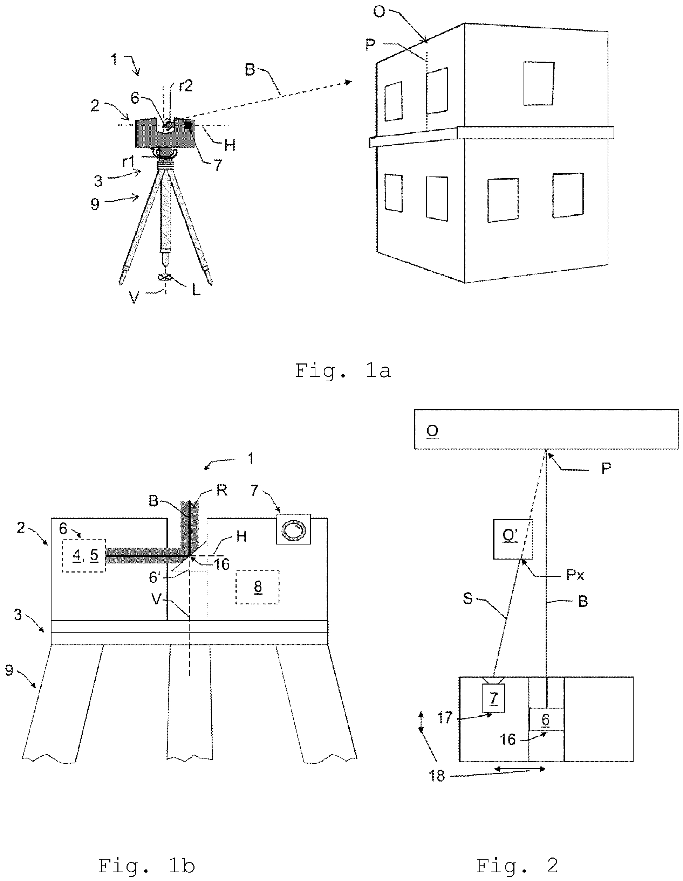

Figs. 1a,b show an exemplary surveying system with a laser scanner 1 for generation of 3D-point clouds representing measured objects O within a scan space or scan sphere, for instance of a radius of up to 200 metres. Such surveying systems are geodetic and/or industrial/metrological applications, used for measuring and/or modelling objects O, in particular man-made parts or structures such as workpieces or buildings, also including architectural applications, but also for measuring a particular environment such as a spot of an accident or disaster (e.g. a damaged or demolished building after an earthquake or the like) or crime scene.

In the example, a land-based outdoor setting with a stationed laser scanner 1 is shown, however, the invention is not limited thereto but can also be applied to, for example, indoor surveys and/or terrestrial mobile surveying systems, e.g. comprising a robot or a drone or multi-copter, carrying a laser scanner 1, or a hand-held scanner. In any case, the laser scanner 1 is positioned close to the object or objects O to be measured, i.e. surveying objects O within a distance of decimetres or metres, up to some hundreds metres at most.

Figure 1a shows the scanner 1 within the setting whereas figure 1b solely shows a more detailed view of the scanner 1. As can be seen, the laser scanner 1 comprises a body or upper part 2 and a base 3, as depicted in the example mounted on a tripod 9 for stationing the scanner 1 within the setting at a location L. The body 2 comprises a distance measuring unit 6 having an emitting unit 4, a receiving unit 5, and a beam directing unit or deflector 6', wherein emitting unit 4 and receiving unit 5 are combined as one part in this example; they may however be embodied by according separate components, e.g. in combination with a beam splitter.

A controlled, motorised relative rotation between body 2 and base 3 is provided around axis V as a first rotation (rotation indicated in the figure by arrow r1). A second rotation (indicated in the figure by arrow r2) is achieved by the beam directing unit 6' mounted in the body 2 such that it is rotatable around an elevation axis H by a motor (not shown). While rotating, the directing unit 6' is deflecting a transmission beam coming from the emitting unit 4 as a free beam B along a target or scanning direction into the measurement space towards objects O to be scanned. The respective angular position about the azimuth and elevational axis each or in short the current scanning direction can be determined by respective angular encoders (not shown). By rotating r2 the mirror 6' about the transverse axis H, the elevational scanning direction can be altered and the measuring beam can be guided in vertical fashion over an object's surface while the azimuth direction can be altered and the beam can be guided horizontally over the surface by rotating r1 the entire upper part 2 about the azimuth axis V. Hence, the scan direction is continuously changed in accordance with a known or defined scanning pattern.

The extent of rotation about both axis H, V and the (maximal) measurement distance define the extent of the setting. Often, a so called full-dome scan is performed, meaning a scan sphere about the full rotation in the horizontal with an angular range in the vertical of e.g. 270° with a maximal distance of some tenth metres, a hundred metres or several hundred metres so that a spherical range is provided, which depicts almost the entire surrounding up to the maximal range in all spatial directions. However, arbitrary other angle ranges are also possible.

After the reflection of the free beam B on the target object surface, the received beam R is guided by the rotatable beam deflection unit 6' towards the receiving unit 5 and through further optical means such as lenses or mirrors (not shown) onto an optical sensor or receiver such as an APD diode (not shown) for e.g. time-resolved detection of the measuring radiation. The distance to the object point P can be determined from a time of flight of a (pulsed) measurement light or other methods in principle known in the art, such as phase measurement.

A control and evaluation unit 8 is data-connected to the sensor resp. to the radiation emitter 4 and a radiation receiver 5 of the scanner 1 as well as above mentioned angular encoders. In the shown example, such a computer 8 is comprised by the housing 2. The computer may, however, also be external to the laser scanner 1, e.g. embodied by a cloud computer having permanent wireless connection to the laser scanner. The computer 8 is configured to control the mentioned components of the laser scanner 1 and to perform the steps of the method according to the invention. The control and evaluation unit 8 is in particular embodied to determine, for a multiplicity of measurement points, the distance between the laser scanner 1 and a respective scan point P of the measurement object surface O. Together with the determined scanning direction or angular values, a three-dimensional coordinate of a respective scan point P can be precisely ascertained.

In addition to the ascertained distance associated with a direction resp. 3D-coordinate from the laser scanner 1 (or from the origin of the reference system resp. in relation to the station point L), each scan point may in addition have a brightness or intensity value, which is likewise ascertained by the control and evaluation unit 8. The brightness is a greyscale value which is ascertained, for example, by integrating the band-pass-filtered and amplified signal of the radiation receiver over a measuring period assigned to the measurement point P. These values of an intensity layer can form an intensity image of the scan.

Individual object or scan points P are thus measured, wherein the respective distance to the scan point and the respective alignment of the scanning direction in relation to two measurement axes H, V (current horizontal and vertical beam emission direction) or two angles are determined. The scanning process thus produces a point set containing three-dimensional information about the surface of the scanned objects such as building O, often combined with additional information such as intensity values. The totality of the measurement points of such a measurement is referred to as the scan and may yield a 3D-point cloud.

The pointwise 3D-data or 3D-information, e.g. as spherical or Cartesian coordinates or as a point distance grid (for example derived from such 3D-coordinates or directly generated from the raw measurement data), which point distance grid maps the measured point distances in dependence on the respective scanning direction, can be stored as a depth layer of a point cloud, which layer can be stored in addition to the spherical or carthesian coordinates as such. Likewise, intensity data of the received light associated with the measured object points can be stored as an intensity layer of the point cloud. Hence, a point cloud typically comprises spherical coordinates of scan points (azimuth, elevation and distance) or (for example calculated out of spherical coordinates) carthesian coordinates of scan points (xyz), colour layer (RGB), a depth layer, an intensity layer and flags/flag layer.

A display apparatus (not illustrated here), which can be configured as a display directly on the laser scanner 1 or as a display of a connected computer, e.g. tablet or smartphone, can be connected to the control and evaluation unit 8 for showing the point cloud to a user.

Further, in the example, at least one colour camera 7, in particular a wide-angle camera, a panoramic camera, a spherical camera or similar, is arranged at or in the housing 2. The one or more cameras 7 may in particular be incorporated in the housing or the camera(s) 7 may be mounted or attached to the housing or to the base 3 or to the tripod 9 or otherwise arranged, for example handheld, as long as there is a defined or determinable camera pose (position and orientation) relative to the beam direction/distance measuring unit resp. to the reference system, whereby the cameras 7 can differ in parallax shift relative to a centre of origin of the distance measuring unit.

Hence, digital colour images such as high resolution RGB images of e.g. 1MP minimum can also additionally be generated by means of camera 7 of the scanner 1 that allow additional colour information, in particular RGB-values, to be assigned to the measurement points P to provide a textured or colourized point cloud as already mentioned above.

Hence, an exemplary laser scanning system is equipped with one or more cameras 7 for taking images (or also providing a video stream) of the scanned environment. Moreover, such surveying devices 1 with one or more cameras 7 are also known, said cameras 7 allowing wide angle or panoramic images of the measurement space to be recorded.

However, with known approaches and devices, there are several problems when colourizing a point cloud as for example described in context of following figure 2.

**Fig. 2** shows schematically in an exemplary manner the general problem of misassignment of a colour image pixel to a 3D-point because the distance measuring unit 6 and the camera 7 "perceive" the setting from different viewing angles or have different line of sights (camera line of sight S compared to targeting or beam direction B as given by the beam direction unit, e.g. mirror 6' in figure 1b). Placing such RGB cameras on a laser scanning device off axis as shown has some advantages over on-axis placements, like faster image capturing. However, an offset between the lidar measuring unit 6 and cameras 7 can lead to parallax artifacts in the colourized point-cloud.

This misassignment problem is caused by the parallax shift between the instrument centre 16 of the surveying instrument (cf. Fig. 1a). The measurement centre 16 may also be referred to as "nodal point" and defined as the origin of an instrument coordinate system (within which the 3D coordinates of the point cloud are recorded), on the one hand and the projection centre 17 of the camera, which is the vertex of the camera's angle of view (also referred to as entrance pupil or "no-parallax point") on the other hand. The parallax is schematically indicated in the figure by arrows/lengths 18 as a shift in two directions; of course, parallax might be a 3D-shift (depth and lateral parallax).

As indicated in the figure 2, for example a parallax error might result in that the surveying instrument 1 targets an exemplary point P of an object surface O, and the camera 7 tries to capture the same point. However, instead the camera 7 captures a different point Px of another object O'. Hence, with known methods and instruments, colour information given by an image pixel referring to the second object O' would be mistakenly assigned to the 3D-point P of the first object O. Therefore, spots are present where colour information is wrong or missing in the colourized point-cloud.

Such parallax problems aggravate when multiple cameras 7 with an offset to the measurement centre 16 and/or offsets to another are used or multiple images from different viewpoints 17 are captured. When aligning multiple images to form one combined 2D-image of the setting, even more shifts or misalignments between the 3D-points and 2D-pixels are introduced.

Known methods for producing a panorama image or the like from multiple images align and distort the single images to provide a stitched panorama with the best visual quality regarding parallax artifacts between camera poses. Geometrical correctness is reduced and thus assigning pixels and their colour information to the 3D-point in a correct manner is even more prone to error, resulting in even more artifacts and wrong or missing colourisation of point cloud points.

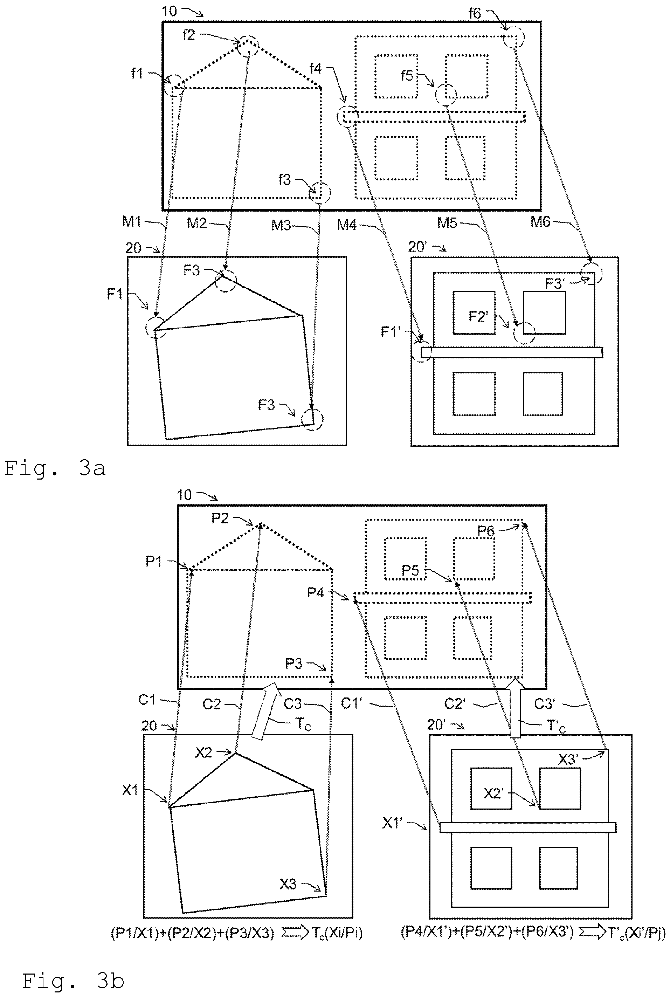

**Figs. 3a**,**b** show schematically an example of an improved method for point cloud colourization which can for example be executed by a computer of an inventive surveying system. Shown are schemes of a point cloud 10 and of a different colour images 20, 20' of the same setting.

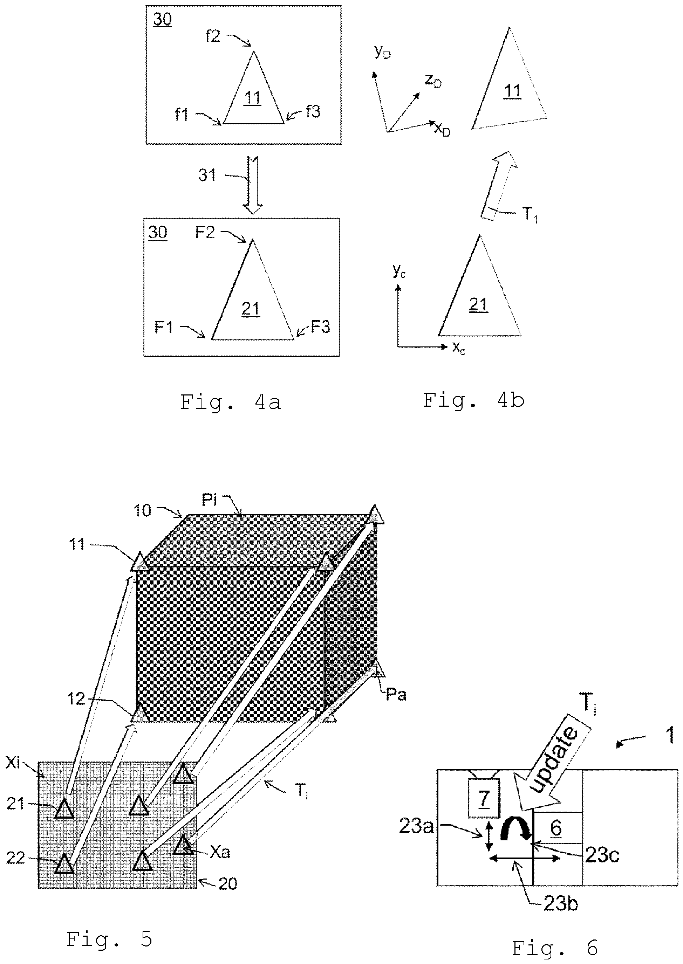

As a preliminary optional measure, the point cloud can be kinematically corrected and cleaned and the 3D-points can be projected to a common surface such as a sphere or cube (see also figure 4a).

In a first central step, features f1-f6 are detected in the point cloud respectively in at least one of its considered information layers, i.e. depth and/or intensity layer 10. Layer features can be prominent points or points discerned from surrounding points. However, they can also be other types of distinctive groups or clusters of neighboured survey points, e.g. a point cluster signifying or representing a certain object such as "road" or "building" forming a depth feature or intensity feature. Features applied in the suggested workflow can also be corners or edges of objects; using corner points and edges as anchors is particularly advantageous because these are mainly prone to parallax artifacts.

In another central step, corresponding features F1-F3 of the first image 20 and F1'-F3' of the second image 20' are detected in the colour images 20 and 20'. Methods or algorithms for feature extraction in a camera image and point cloud respectively depth layer or intensity layer are known in the art using for instance morphological filtering, region growing, edge detection, Harris operator, feature descriptors, embedding vectors or clustering. Feature detection can be based on handcrafted feature detectors or on machine learning, making for example use of deep learning algorithms or neural networks as an option.

In the example, the image feature detection is retarded compared to the 3D-feature detection in order to make use of already detected point cloud features f1-f6, for example in that based on positions of the point cloud features f1-f6 regions of interest or specific search areas are defined wherein image features F1-F3' are searched. Also, a feature class or type of feature extraction can be selected based on the detected 3D-features f1-f6. However, as an alternative, the image feature extraction can be completely independent of the point cloud feature extraction, both for example running in parallel.

In any case, in a further main step, 2D-features F1-F3, F1' -F3' are matched to their corresponding point cloud or 3D-feature counterparts f1-f6, indicated in the figure 3a by arrows M1-M6. In other words, features found in the camera image are correlated with analogue or equivalent features of the 3D-measurement, i.e. features of the depth layer and/or intensity layer. This matching M1-M6 is done for every image 20 and 20', independent of another.

For instance, if features are detected in both the intensity layer and depth layer of the point cloud, point cloud intensity features and depth features can be fused into one layer, which can improve feature matching by increasing density of correspondence between image features F1-F3' and point cloud features f1-f6.

As another option, not depicted in the figure for reasons of clarity and simplicity of depiction, additional 3D-measurement or scan data e.g. in form of a flags layer of the point cloud can be automatically taken into account, for instance measurement meta data such as range noise, SNR, signal distortion, pulse broadening, saturation flag and more meta-data or flags, e.g. determined by above mentioned filtering procedure or in a separate step. Considering the flags of a point underlying a feature, an automatic weighting or classification of detected features can be applied, for example features to be imperatively considered or, to the contrary, features to be excluded for said feature matching/anchoring if flagged according to a certain category. Examples for features to be disregarded can be features attributed to typically moving objects or features attributed to a background.

The matched corresponding features or feature pairs f1->F1, f2->F2,..., f4->F1' etc are used for applying the respective colour information of a respective RGB-image 20, 20', i.e., the correspondence of the image features f1-f6 to the point cloud features F1-F3' allow to allocate the colour data of the pixels X1-X3 resp. X1'-X3' underlying the respective image feature F1-F3 resp. F1'-F3' to the 3D-points P1-P6 underlying the respective point cloud features f1-f6.

These allocations, indicated in the figure by arrows C1-C6, provide information about respective positional relationship between the images 20, 20' and the point cloud 10 or more precisely between the image pixels and the point cloud points. Thereby, the positional relationships established based on the feature matching M1-M6 serve as fix points or reference points which are used to define transformations T_{c}, T'_{c} for the whole colour information of a respective image 20, 20'.

That is, based on the known pixel position of a respective pixel within an image 20, 20' and using the determined positional link of feature pairs (P1/X1), (P2/X2) etc., colour information of all pixels Xi can be translated in a positional correct manner to the corresponding 3D-points Pi, based on their known voxel position within the point cloud 10. The feature pixels X1-X3' serve as anchors or position landmarks guiding distribution of the whole colour information.

Hence, by first finding feature correspondences, these are used as references which indicate trustworthy linkage of a couple of image pixels X1-X3' to a couple of point cloud points P1-P6. The other pixels Xi are attributed or distributed to the other 3D-points Pi using this references. Thus, finally a colour layer can be allocated or assigned to the depth/intensity layer 10 -or more generally spoken the colour information to the point cloud-in an optimal geometric true fashion. Naturally, the more matched features of anchor points are available, the more accurate is the complete colour allocation, in particular in case of settings with complex object surfaces geometry or nested scan environments.

As already indicated, the transformations T_{c}, T'_{c} are individually determined for every image 20, 20' -only based on the individual relationship of a respective image (feature) to the point cloud (features)- and therewith independent of the images 20, 20' to another. Thus, in contrast to approaches which first stitch images together based on the 2D-data and after that apply the fused image to the point cloud, thereby likely introducing errors or distortions caused by the preliminary image stitching/alignment process, the present method does not need any explicit 2D-image stitching at all. The images 20, 20' are so to say at most only implicitly stitched together by applying their individual colour information to the point cloud which therewith presents the colour information of all images 20, 20' in a combined manner. Accurate measurement is still possible in the point cloud due to the 3D backed stitching.

As another advantage, the colour information of the point cloud is not restricted to that of the 3D-points Pi themselves. Instead, colour information is at most attributed only to some distinct 3D-points (namely the reference points P1-P6) and otherwise "freely" distributed about the point cloud, in principle not bound to 3D-points Pi as such. In contrast to known methods, where the RGB resolution cannot exceed the 3D-resolution, here the colour resolution of a point cloud is not restricted by the 3D-point-cloud resolution or scan density, which is advantageous as often high-resolution panorama images are needed for visualization purposes, for instance HDR images with 16- or 32-bit colour depth. These are often coupled with low resolution 3D data which because of the proposed method needs no more "downgrade" of a camera image.

With the proposed surveying method and system, it is possible to keep the image resolution provided by the camera while avoiding or handling parallax artifacts and ensure measurement accuracy in the final panorama. The output image resolution is only restricted by the input image resolution itself and not by the point cloud-resolution.

As the application of the colour data to the 3D-data is as said done individually for each input image 20, 20', it is in principle also possible to freely combine images 20, 20' of different image resolution as another advantage.

**Figs. 4a****,b** show schematically a further development of the feature based inventive method wherein features are triangulated.

As indicated in figure 4a, a surface 30 is used for projecting 3D-features f1-f3 resp. the 3D-points as well as 2D-features F1-F3 resp. image pixel to a common surface, for example a in case of a 360°-scan a sphere or a cube. All 3D-data and all images can be projected independently of another to the same surface 30 based on extrinsic/intrinsic calibration, whereby all pixel information an induvial image provides can be preserved.

In the example, 3D-features f1-f3 are triangulated, for example based on Delaunay triangulation (maximization of the minimum angle of each triangle). This results in feature triangle 11, as an example of a 3D- or point cloud structural composite.

As indicated by arrow 31, this triangulation is used to triangulate the corresponding image features F1-F3. Hence, the depth layer triangulation serves as blueprint for triangulation of features in the image layer. Thus, an image feature triangle 21 -as an exemplary 2D- or image structural composite- is derived according to 3D-feature triangle 11.

Figure 4b depicts that the determined feature triangles are used for deriving a transformation T₁ between pixel positions and point cloud positions. The triangulation is used to calculate the affine transform of image triangles to 3D triangles, schematically indicated in the figure by transformation from the coordinate frame xc-yc of the image triangle 21 to the coordinate frame xD-yD-zD of the depth triangle 11.

Such transformation can be established for every matched feature triangle. Hence, there is a transformation Tᵢ for every image triangle, which is applied to allocate the colour information of an image to the 3D-point cloud data. This is further illustrated in the example of following figure 5.

**Fig. 5** schematically illustrates an exemplary transformation of image data to 3D-data.

As described above in context of figures 4a,b, features triangles of matched features (in the example corners) such as explicitly denoted triangles 11, 12 resp. 21, 22 are derived in the point cloud 10 (depth layer) and in the image 20. From each pair of triangles, a transformation Tᵢ can be derived, indicated in the figure by the white arrows. Said otherwise, there is a triangle morphing of the image triangle 21, 22 onto the 3D-model 10.

Therewith, not only colour information of pixels Xa can thus be assigned to the corresponding 3D-points Pa, but using this referencing as fix or anchor points, also the colour information of the other pixels Xi can be allocated to the other 3D-points Pi, based on the known position of each pixel and each 3D-point.

Thus, colour information of pixels Xa representing matched features in the image 20 can be allocated by associating coordinates of 3D points Pa representing a respective matched feature in the point cloud 10, based on a known positional relationship of a point cloud's coordinate frame to a first image's coordinate frame whereas colour information of image pixels Xi not representing matched features can be allocated using the locations of allocated pixels Xa representing matched features used as positional reference.

In other words, the anchoring of the image data by matched feature triangles allows to warp the image data correctly onto the 3D data. The image data from the warped layer is the final colour information for the 3D layer, whereby as already mentioned the resolution of the colour layer is independent of the resolution of the depth layer.

**Fig. 6** shows an exemplary scheme of a camera calibration using transformation parameters.

The figure depicts schematically the laser scanner 1 with the distance measuring unit 6 and colour camera 7. Calibration values provide for accurate information about the positional imaging parameters (e.g. exemplary relative locations depicted as arrows 23a-c) of the camera 7 in an internal reference system or the camera's pose relative to the distance measuring unit 6 or more precisely beam direction unit 6' (cf. figure 1b).

Such calibration parameters 23a-c are determined by known calibration methods, in particular factory calibrations. Such state of the art calibration procedures make use of capturing images of a calibration reference and image processing identifying points of interest in the captured images. For that, a calibration reference is selected where certain features (e.g. centre of index marks) are known with superordinate accuracy in terms of coordinates of a 3D reference point on the calibration reference. An example of such a calibration reference is a calibration plate comprising known circles (and their centres) as reference features.

Images of the calibration reference are taken in different positions (poses) in order to cover a measurement volume of the system. Then, image points of the calibration reference points are detected in the images, in particular by means of an image-processing algorithm. Based on the identified image points, a mapping between the image points and corresponding calibrations reference points is established (e.g. also algorithmically). In a next step, an orientation of the camera 7 as well as the camera model parameters 23a-c are calibrated such that a best fit through a model between image points and calibration reference points is obtained. The calibrated orientation of the camera 7 as well as the camera model parameters 23a-c are stored in a system's memory and used for subsequent surveying measurements.

The above described procedure of allocation of the colour information of the camera 7 to the scan points is now used as basis for improving the surveying accuracy given by the calibration parameters 23a-c, as purely schematically indicated in the figure as positional information of the camera 7 relative to the scan unit 6 (alignment of the camera 7 with regard to translational degrees of freedom as exemplified in illustration by arrows 23a,b and rotational degrees of freedom as exemplified in illustration by arrow 23c with regard to the internal reference system of the scanner 1). Said stored calibration parameters 23a,b,c may represent the actual pose of camera 7 relative to the measuring unit 6 not correctly due to environmental influences, shocks etc. since last calibration.

The values of parameters 23a-c can be corrected, i.e. adapted to represent the actual condition of camera 7 (more) precisely, using above mentioned anchor points which provide information about the actual relative pose camera 7 - scan unit 6. The correct allocation of camera features to 3D-features by above described feature matching/anchoring allows to derive corrected values for calibration parameter 23a-c of camera 7.

As indicated in the figure, the calibration update of the camera 7 can for instance be derived from a transformation Ti between image pixel positions and point cloud positions (a transformation Ti as exemplified with respect to figures 3-5 above). Also, camera's calibration parameter updates can be based only on some specific or prominent, most reliable or robust matched features or anchor points or categories of these as reference of the current or real alignment of the camera 7 to the distance measuring unit 6 ((respectively the 2D-image projection centre 17 of scanner 1 relative to the measuring cent 16; cf. figure 2).

In other words, any misalignment between lidar 6 and camera 7 which is determined in course of the feature-based positional anchoring is used to update an extrinsic or previous camera calibration, e.g. a factory calibration. This "anchor"-calibration can be applied in the field during colourization or just stored for further processing steps, e.g. as an in-the-field calibration which is used during office import colourization. For the second use-case all the local calibrations for one single camera are merged to one camera calibration and stored on a memory of the surveying system.

Although the invention is illustrated above, partly with reference to some preferred embodiments, it must be understood that modifications and combinations of different features of the embodiments can be made.

## Claims

1. A method for colourising a three-dimensional (3D) point cloud, comprising:
• surveying object surfaces (0) of a setting according to a scan pattern and generating the 3D-point cloud thereof, the 3D-point cloud providing an intensity layer and/or a depth layer (10) representing 3D-information of surveyed object surface points (P, P1-P6),
• capturing at least a first 2D-colour image (20) of at least part of the setting, providing colour information of the object surfaces (O) by colour values of pixels of known pixel position in the image (20), and
• automatically
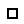 detecting first intensity features in the intensity layer and/or first 3D-features (f1-f3) in the depth layer (10),
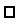 detecting first 2D-features (F1-F3) in the image (20) ,
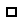 matching (M1-M3) corresponding intensity features and/or 3D-features and 2D-features (f1-f3),
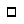 using matched features (f1-f3, F1-F3) as positional anchor points for allocating the colour information (C1-C3), based on the known pixel positions, as a colour layer to the point cloud.

2. The method according to claim 1,
**characterized in that**
colour information of pixels representing matched features (F1-F3) in the image (20) is allocated by associating coordinates of 3D points (P1-P3) representing a respective matched feature (f1-f3) in the point cloud, based on a known positional relationship of a point cloud's coordinate frame to an image's coordinate frame.

3. The method according to claim 2,
**characterized in that**
colour information of pixels not representing matched features is allocated using the locations of allocated pixels representing matched features (f1-f3, F1-F3) used as positional reference, whereby the resolution of the colour layer is independent of the resolution of the depth and/or intensity layer (10).

4. The method according to one of the preceding claims, **characterized by**
taking a 3D-information of the feature (f1-f3) of the depth and/or intensity layer (10) into account for said feature matching.

5. The method according to one of the preceding claims, **characterized by**
automatically
• deriving 3D-structural composites (11) from at least some of the intensity and/or 3D-features (f1-f3) of the depth and/or intensity layer (10),
• from corresponding matched 2D-features (F1-F3), deriving 2D-structural composites (21) corresponding to the 3D-structural composites (11),
• calculating an affine transformation (T1, Ti) of a respective 2D-structural composite (21) to the corresponding 3D-structural composites (11), and
• basing said allocation on the calculated affine transformations (T1, Ti).

6. The method according to claim 5,
**characterized by**
the structural composites (11, 21) comprise simplexes, in particular whereby said deriving of a composite (11, 21) is based on Delaunay triangulation.

7. The method according to one of the preceding claims, **characterized by**
• detecting object corner-points and/or edges as 2D-features (F1-F3) and/or features (f1-f3) of the depth and/or intensity layer (10), and/or
• the detecting of features (F1-F3) in the image (20) is position targeted using determined positions of detected features (f1-f3) of the depth and/or intensity layer (10).

8. The method according to one of the preceding claims, **characterized by**
automatically
• projecting the depth and/or intensity layer (10) and the image (20) to a common projection surface (30), in particular a sphere or cube, and
• using respective projection positions of features (f1-f3, F1-F3) for said feature matching (M1-M3).

9. The method according to one of the preceding claims, **characterized by**
capturing at least a second 2D-colour image (20') providing second colour information of object surfaces of at least a partly different part of the setting, whereby allocating second colour information of the second image (20') is based on second 2D-features (F1'-F3') of the second image (20') matched to second intensity and/or 3D-features (f4-f6) of the point cloud and therewith substantially independent of said allocating of colour information of the first image (20) .

10. The method according to claim 9,
**characterized by**
a common colour layer from a combined first and second colour information whereby the combination solely results from the respective allocation to the intensity and/or depth layer (10).

11. The method according to one of the preceding claims, **characterized by**
• flagging of points of the 3D-point cloud and/or of pixels of the image (20),
• considering the flags for said feature matching, by weighting and/or classifying of a respective intensity and/or 3D-feature according to an underlying flag.

12. The method according to one of the preceding claims, **characterized by**
automatically fusing the intensity layer and the depth layer (10) before feature matching and basing the feature matching on fused intensity features and 3D-features (f1-f3).

13. Surveying system comprising
• a laser scanner (1) having
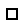 a beam directing unit (6') configured to direct a transmission beam (B) in a determined direction according to a scan pattern towards surface points of objects (O) within a setting and receive a reception beam (R) reflected from the object surface points (P, P1-P6),
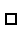 a distance measuring unit (6) for determining an object point depth based on an evaluation of the reception beam (R),
• at least one camera (7) configured to capture at least a first 2D-colour image (20) providing colour information of the object surfaces by colour values of pixels of known pixel position in the first image, the camera (7) being arranged in known positional relationship (18) to the beam direction unit (6'), and
• a computer (8) configured to generate a 3D-point cloud providing an intensity layer and/or a depth layer (10) representing 3D-information of surveyed object surface points (P) based on the determined direction and object point depth,
**characterized in that**
the computer (8) is further configured to
• detect first intensity features in the intensity layer and/or first 3D-features (f1-f3) in the depth layer (10),
• detect first 2D-features (F1-F3) in the first image (20) ,
• match (M1-M3) corresponding intensity features and/or 3D-features and 2D-features (f1-f3, F1-F3),
• use matched features (f1-f3, F1-F3) as positional anchor points for allocating the colour information (C1-C3), based on the known pixel positions, as a colour layer to the point cloud.

14. The surveying system according to claim 13, **characterized in that**
the computer (8) is further configured to update at least one calibration parameter (23a-c) of the camera (7) based on the positional anchor points.

15. A computer program comprising program code which is stored on a machine-readable medium, or being embodied by an electromagnetic wave comprising a program code segment, and has computer-executable instructions for performing the automatic steps of the method according to claim 1, in particular when run on a computer of a surveying system according to claim 13.
